(19) Europäisches Patentamt
European Patent Office
Office européen des brevets

(11) **EP 2 270 374 A2**

(12) **EUROPÄISCHE PATENTANMELDUNG**

(43) Veröffentlichungstag:
**05.01.2011 Patentblatt 2011/01**

(51) Int Cl.:
***F16L 1/028*** *(2006.01)*

(21) Anmeldenummer: **10005358.6**

(22) Anmeldetag: **21.05.2010**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO SE SI SK SM TR**<br>Benannte Erstreckungsstaaten:<br>**BA ME RS**<br><br>(30) Priorität: **29.06.2009  DE 102009031028**<br><br>(71) Anmelder: **IFK Gesellschaft m.b.H.**<br>**5020 Salzburg (AT)** | (72) Erfinder:<br>• **Kuchler, Thomas**<br>**94491 Hengersberg (DE)**<br>• **Knapp, Eduard**<br>**5300 Hallwang (AT)**<br><br>(74) Vertreter: **Manitz, Finsterwald & Partner GbR**<br>**Postfach 31 02 20**<br>**80102 München (DE)** |

(54) **Verbessertes Verfahren und System zur Leitungsverlegung mit Querneigungs- und Tiefenmessung sowie Geländeerfassung**

(57) Die vorliegende Erfindung betrifft ein Verfahren zum überwachten Verlegen von Leitungen (22) im Erdreich (E) sowie ein System, mit dem sich Leitungen (22) im Erdreich überwacht verlegen lassen. Bei dem Verfahren wird im Erdreich ein Verlegeschlitz (38) zur Aufnahme der zu verlegenden Leitung erzeugt, wobei in den Verlegeschlitz (38) mittels eines in den Verlegeschlitz hineinragenden Einführelements (18), welches auf der Sohle (40) des Verlegeschlitzes (38) in Längsrichtung desselben entlang bewegt wird, die Leitung (22) in den Verlegeschlitz (38) eingeführt wird. Zur Überwachung der Leitungspositionsdaten entlang der eingeführten Leitung (22) wird wiederholt ein sich mit dem Einführelement (18) mitbewegender, für die Verlegetiefe der Leitung (22) repräsentativer Punkt (24) vermessen, welcher in vertikaler Richtung einen definierten, konstanten Abstand zu einer auf der Sohle (40) des Verlegeschlitzes (38) aufstehenden Unterseite des Einführelements aufweist. Bei der Ermittlung der Leitungspositionsdaten wird ein seitlicher Versatz des für die Verlegetiefe der Leitung repräsentativen Punktes bezüglich der auf der Sohle (40) des Verlegeschlitzes (38) aufstehenden Unterseite des Einführelements berücksichtigt, indem ein für eine Schrägstellung des Pflugschwerts (16) gegenüber der Vertikalen repräsentativer Winkel bestimmt und daraus unter Verwendung des Sollabstands (A) der seitliche Versatz ermittelt wird.

<u>Fig.1</u>

EP 2 270 374 A2

**Beschreibung**

Die vorliegende Erfindung betrifft ein Verfahren zum überwachten Verlegen von Leitungen im Erdreich gemäß dem Oberbegriff des Anspruchs 1. Ferner betrifft die Erfindung ein System, mit dem sich Leitungen im Erdreich überwacht verlegen lassen und das die Merkmale des Oberbegriffs des Anspruchs 18 aufweist.

Ein gattungsgemäßes Verfahren und ein gattungsgemäßes System sind aus der DE 10 2007 043 647 A1 bekannt geworden.

Sofern im Rahmen der vorliegenden Erfindung von Leitungen die Rede ist, so sind hierunter Rohre wie beispielsweise (Ab)-Wasserleitungen mit Sohlgefälle und/oder elektrische Leitungskabel wie beispielsweise Starkstromkabel, insbesondere Starkstromkabel mit einer Spannungsfestigkeit von 110 kV und mehr zu verstehen.

Da Leitungen üblicherweise unter Flur verlegt werden, ist es im Rahmen der Leitungsverlegung meist erforderlich, zunächst beispielsweise mit einem Bagger entlang der geplanten Leitungstrasse einen Graben auszuheben, in welchem anschließend die Leitung angeordnet bzw. verlegt wird. Abschließend muss dann der Graben mit dem zuvor entfernten Aushubmaterial wieder verschlossen werden. Diese herkömmliche offene Bauweise ist jedoch verhältnismäßig arbeitsintensiv und daher in wirtschaftlicher Hinsicht nur wenig rentabel. Außerdem verursacht dieses konventionelle Verfahren einen hohen Flurschaden, welcher ökologisch bedenklich sein kann.

Ein wirtschaftlicheres und umweltschonenderes Verfahren zum Verlegen von Leitungen stellt das sogenannte Pflügeverfahren dar. Bei diesem Verfahren wird mit Hilfe eines sogenannten Verlegepflugs ein schmaler grabenartiger Schlitz im Erdreich erzeugt, wobei während der Herstellung des Schlitzes gleichzeitig eine oder mehrere Leitungen auf der Sohle des Schlitzes abgelegt werden. Zur Herstellung des Schlitzes weist dabei der Verlegepflug als Arbeitsorgan ein so genanntes Pflugschwert auf, welches mit hohen Kräften das Erdreich auseinanderpresst, wenn sich der Verlegepflug entlang der geplanten Leitungstrasse bewegt. Um die Leitung dabei in den Schlitz einführen und auf dessen Sohle ablegen zu können, ist dem Pflugschwert ein Einführelement nachgeordnet und mit dem Pflugschwert gekoppelt, welches zusammen mit dem Pflugschwert von dem Verlegepflug durch den von dem Pflugschwert unmittelbar zuvor erzeugten Schlitz gezogen wird. Während sich der Verlegepflug entlang der geplanten Leitungstrasse bewegt, wird also gleichzeitig die Leitung durch das Einführelement in den Schlitz eingeführt und auf dessen Sohle abgelegt. Nach dem Verlegevorgang schließt sich der Verlegeschlitz wieder selbsttätig ohne weiteres Zutun, da das zuvor aufgepflügte Erdmaterial von selbst wieder zurück in den Verlegeschlitz fällt.

Bei einem anderen als Torpedo- oder Raketenpflugverfahren bekannten Pflügeverfahren wird ebenfalls mit einem Pflugschwert ein Schlitz im Erdreich erzeugt, wobei die einzupflügende Leitung an einem als Einführelement dienenden Aufweitkörper, welcher hinter dem Pflugschwert durch den zuvor erzeugten Schlitz gezogen wird, in den Schlitz eingezogen wird. Die Leitung wird somit über die gesamte Länge des erzeugten Schlitzes hinweg von einem Startpunkt aus in den Schlitz ein- und durch denselben hindurch gezogen.

Bei den genannten Pflügeverfahren kann jedoch nicht mit letzter Sicherheit eine Aussage darüber getroffen werden, ob die erforderliche Verlegetiefe der Leitung eingehalten wurde. Zwar ragt das Einführelement während des Verlegevorgangs aus dem Verlegeschlitz nach oben heraus, sodass grundsätzlich aus dem Überstand aus dem Erdreich auf die Verlegetiefe geschlossen werden könnte. Allerdings wird während des Einpflügevorgangs kontinuierlich Erdmaterial seitlich entlang des Verlegeschlitzes aufgehäuft, sodass anhand des Überstands des Einführelements über dieses aufgehäufte Erdmaterial nicht zuverlässig auf die Verlegetiefe in Bezug auf die ursprüngliche Geländeoberfläche geschlossen werden kann.

Gerade bei der Verlegung von Hochspannungsleitungen wie beispielsweise 110 kV-Leitungen ist es jedoch erforderlich, bestimmte vorgegebene Verlegetiefen aus Sicherheitsgründen einzuhalten. Ebenso ist es von höchster Wichtigkeit, die richtige Höhenlage von Gefälleleitungen wie beispielsweise (Ab)-Wasserleitungen einzuhalten, damit die Leitung das erforderliche Gefälle aufweist.

Da der zuverlässigen Einhaltung und Überwachung der vorgegebenen Verlegetiefen somit große Bedeutung zukommt, wurde von der Anmelderin das in der DE 10 2007 043 647 A1 beschriebene Verfahren sowie das zur Durchführung dieses Verfahrens ausgebildete System entwickelt, womit es möglich ist, Hochspannungsleitungen und/oder Gefälleleitungen unter Verwendung eines Pflügeverfahrens zu verlegen.

Da sich die Empfangseinheit in Form eines Reflektors zur Tachymetervermessung des in der DE 10 2007 043 647 A1 beschriebenen Systems jedoch aus vermessungstechnischen Gründen am Ende eines verhältnismäßig langen Stabes befindet, der mit dem Pflugschwert gekoppelt ist, stimmt die Lage der Empfangseinheit in der horizontalen x-y-Ebene nicht genau mit der Lage des zuletzt verlegten Leitungsabschnitts überein, wenn das Pflugschwert beispielsweise aufgrund topografischer Gegebenheiten während des Verlegevorgangs eine seitliche Schrägstellung erfährt. Die der Erfindung zugrunde liegende Aufgabe besteht somit darin, eine Realisierung anzugeben, welche eine noch genauere überwachte Verlegung von Leitungen ermöglicht.

Diese Aufgabe wird gemäß einem ersten Aspekt der Erfindung durch ein verbessertes Verfahren zum überwachten Verlegen von Leitungen im Erdreich mit den Merkmalen des Anspruchs 1 und insbesondere dadurch gelöst, dass bei der Ermittlung der Leitungspositionsdaten ein seitlicher Versatz des für die Verlegetiefe der Leitung repräsentativen Punktes bezüglich der auf der Sohle des Verlegeschlitzes aufstehenden Unterseite des Einführelements berücksichtigt wird, indem ein für eine Schrägstellung des Pflugschwerts gegenüber der Vertikalen repräsentativer Winkel bestimmt und daraus unter Verwendung des Sollabstands der seitliche Versatz ermittelt wird.

Gemäß einem zweiten Aspekt wird die der Erfindung zugrunde liegende Aufgabe durch ein verbessertes System zum überwachten Verlegen von Leitungen im Erdreich mit den Merkmalen des Anspruchs 9 und insbesondere dadurch gelöst, dass das System einen Querneigungsmesser, der an dem Verlegepflug derart angeordnet und eingerichtet ist, um einen für eine Schrägstellung des Pflugschwerts gegenüber der Vertikalen repräsentativen Winkel zu bestimmen, und eine Auswerteinheit umfasst, welche zur Berücksichtigung eines seitlichen Versatzes zwischen dem für die Verlegetiefe repräsentativen Punkt und der auf der Sohle des Verlegeschlitzes aufstehenden Unterseite des Einführelements eingerichtet ist, um auf Grundlage der von der Erfassungseinrichtung erfassten Positionsdaten unter Verwendung des Sollabstands sowie des von dem Querneigungsmesser bestimmten Winkels die tatsächlichen Leitungspositionsdaten zu bestimmen.

Sofern bei dem erfindungsgemäßen Verfahren der Sollabstand zwischen dem für die Verlegetiefe repräsentativen Punkt und der Unterseite des Einführelements berücksichtigt wird, so ist hierunter der in vertikaler Richtung gemessene Abstand zwischen dem für die Verlegetiefe repräsentativen Punkt und der Unterseite des Einführelements bei nicht schräg stehendem Pflugschwert bzw. nicht schräg stehendem Einführelement zu verstehen.

Wie aus der voranstehenden Darstellung der Erfindung entnommen werden kann, wird während des Einpflügens der Leitung im Erdreich die Verlegetiefe der Leitung dadurch bestimmt, dass kontinuierlich die Position eines für die Verlegetiefe der Leitung repräsentativen Punktes vermessen wird, welcher in einer vorherbestimmten relativen Beziehung zu dem Einführelement steht. Da der genannte Punkt in vertikaler Richtung einen definierten konstanten Abstand zu der auf der Sohle des Verlegeschlitzes aufstehenden Unterseite des Einführelements aufweist, ist es somit nach der Vermessung des genannten Punktes ohne Weiteres möglich, eine Aussage darüber zu treffen, welche Höhenlage die Sohle des Verlegeschlitzes aufweist und wie tief die Leitung verlegt wurde.

Es wird also nicht der Überstand des genannten Punktes an dem Einführelement über das aufgehäufte Erdmaterial gemessen, da dies zu verfälschten Ergebnissen führen kann; vielmehr wird kontinuierlich die genaue Lage des genannten Punktes an dem Einführelement in Bezug auf ein vorgegebenes Bezugsystem vermessen, so dass aus den so ermittelten Leitungskoordinaten genau auf die Verlegetiefe geschlossen werden kann.

Dadurch, dass jedoch das Einführelement, das letztendlich die Leitung auf der Sohle des erzeugten Schlitzes ablegt, mit dem Pflugschwert gekoppelt ist und somit dieselbe Schrägstellung wie das Pflugschwert erfährt, kann in Kenntnis des Abstands A zwischen der Sohle des Verlegeschlitzes und dem für die Verlegetiefe repräsentativen Punkt, an dem sich die Empfangseinheit befindet, und der Winkelstellung $\alpha$ des Pflugschwerts gegenüber der Vertikalen beispielsweise über die Beziehung

$$v = (\sin \alpha) * A$$

der seitliche Versatz $v$ des für die Verlegetiefe repräsentativen Punktes gegenüber dem zuletzt verlegten Leitungsabschnitt bestimmt werden, um damit anschließend eine Fehlerkorrektur der ermittelten Leitungspositionsdaten vornehmen zu können.

Sofern im Rahmen der vorliegenden Erfindung von Leitungs- oder Geländepositionsdaten die Rede ist, so sind hierunter ganz allgemein geodätische Informationen zu verstehen, anhand derer ein Punkt im Raum bestimmt werden kann. Da herkömmliche Vermessungsgeräte wie beispielsweise Tachymeter nicht in der Lage sind, absolute Koordinaten in Bezug auf ein feststehendes Bezugsystem direkt zu ermitteln, sondern lediglich zur Messung von Winkeln und Entfernungen eingerichtet sind, kann es sich bei diesen Positionsdaten daher beispielsweise um geodätische Winkel- und/ oder Entfernungsinformationen handeln, anhand derer aus einem zuvor vermessenen Punkt auf die Position eines Folgepunkts geschlossen werden kann. Bei den (Leitungs)-Positionsdaten handelt es sich somit entweder um absolute, also auf ein festes Bezugsystem bezogene, geodätische Daten, oder um relative, also auf einen zuvor vermessenen Punkt bezogene, geodätische Daten. Werden derartige Positionsdaten umgerechnet, um einen Punkt im Raum in Bezug auf ein festes Bezugs- bzw. Koordinatensystem bestimmen zu können, so werden hierunter dann Leitung- bzw. Geländekoordinaten verstanden, wobei die z-Koordinate beispielsweise die geodätische Höhenlage der Leitung über N.N. und die x-und y- Koordinaten deren Lage in der horizontalen Ebene in Bezug auf beispielsweise ein Landeskoordinatensystem angeben können.

Vorteilhafte Ausführungsformen der Erfindung ergeben sich aus den Unteransprüchen, der Beschreibung sowie den Zeichnungen.

Im Folgenden wird zunächst auf spezielle Ausführungsformen des erfindungsgemäßen Verfahrens eingegangen, deren Aspekte sich jedoch in entsprechender Weise auf das erfindungsgemäße System übertragen lassen.

So wird gemäß einer ersten Ausführungsform des Verfahrens auf Grundlage der Leitungspositionsdaten die Höhenlage der in den Verlegeschlitz eingebrachten Leitung in Abhängigkeit von ihren um den ermittelten Versatz korrigierten Lagekoordinaten bestimmt. Die Leitungspositionsdaten liegen somit als eine Vielzahl von Koordinatentripeln vor, wobei in Abhängigkeit von der Lage der Leitung in der horizontal liegenden x-y-Ebene eine Aussage über dessen Höhenlage in z-Richtung vorgenommen werden kann.

Zwar ließe sich die Höhenlage der eingepflügten Leitung auch derart ermitteln, dass die Höhenlage in Abhängigkeit von der Längenentwicklung der eingepflügter Leitung bestimmt wird, welche in laufenden Metern ab einem Startpunkt gemessen wird, jedoch ließe sich hierbei keine Aussage über die korrekte Lage der Leitung in der horizontalen Ebene in x- und y-Richtung treffen. Wenn hingegen die Leitungspositionsdaten in der genannten Weise als Koordinatentripel vorliegen, lässt sich nicht nur eine Aussage über die Höhenlage in z-Richtung der verlegten Leitung treffen; vielmehr kann durch einen Vergleich der Koordinatensolldaten in der Ebene mit den um den ermittelten Versatz korrigierten Koordinatenistdaten in der horizontalen Ebene eine Aussage darüber getroffen werden, ob der Verlauf der Solltrasse eingehalten wurde.

Zwar sind vielerorts Höhenpläne verfügbar, welche zu Zwecken der Leitungstrassierung herangezogen werden können, jedoch erfassen diese Höhenpläne in aller Regel nicht kleinere örtliche Gegebenheiten wie beispielsweise lokale Geländeerhebungen oder -senken, welche jedoch bei der Trassenplanung berücksichtigt werden müssen, um die erforderliche Verlegetiefe einzuhalten.

Dementsprechend kann in einem weiteren Verfahrensschritt zunächst das Gelände entlang der geplanten Leitungssolltrasse genau vermessen werden, um Geländekoordinaten zu erhalten, welche auch kleinere örtliche Gegebenheiten berücksichtigen. Dieser Schritt kann dabei beispielsweise mit Hilfe einer am Verlegepflug oder dessen Pflugschwert angeordneten Abtasteinrichtung durchgeführt werden, welche dem Pflugschwert vorauseilt, wodurch im Wesentlichen gleichzeitig mit der Erzeugung des Verlegeschlitzes auch die Geländevermessung durchgeführt werden kann. Es ist somit nicht erforderlich, extra die Leitungstrasse abzufahren, um eine Geländevermessung durchzuführen.

Im Falle, dass bei dem Erfassen der Geländekoordinaten die Höhenlage und oder -entwicklung des Geländes in Abhängigkeit von den in die x-y-Ebene projizierten Lagekoordinaten der Leitungstrasse erfasst wird, lässt sich durch Vergleich der tatsächlichen Höhenlage mit der Sollhöhenlage nicht nur eine Aussage über die Einhaltung der erforderlichen Verlegetiefe treffen; vielmehr kann durch Gegenüberstellung der Istkoordinaten der verlegten Leitung in der Ebene und der Sollkoordinaten in der Ebene eine Aussage darüber getroffen werden, ob der Solltrassenverlauf eingehalten wurde, was insbesondere im Hinblick auf die Einhaltung von bestimmten Abständen von kritischen Punkten sowie die Einhaltung des Sohlgefälles bei Gefälleleitungen wünschenswert sein kann.

Bereits während des Verlegens der Leitung kann in der voranstehend beschriebenen Art und Weise eine Lage- und Höhenabweichung der eingepflügten Leitung gegenüber der Leitungssolltrasse ermittelt werden. Wenn eine etwaige Abweichung in Lage und/oder Höhe ermittelt wurde, kann dann sofort auf den Verlegevorgang Einfluss genommen werden, um die Leitung wieder der Leitungssolltrasse anzunähern. Hierzu kann ein eine etwaige Lageabweichung repräsentierendes Signal erzeugt werden, unter Verwendung dessen die Bewegungsrichtung des Pflugschwerts und/ oder dessen die Pflügetiefe bestimmenden Pflugschuhs gesteuert wird. So kann beispielsweise in Abhängigkeit von der ermittelten Lageabweichung der Seitenausschlag des Pflugschwerts oder dessen Neigung geändert werden, sodass der Verlegeschlitz bzw. dessen Sohle, auf dem die Leitung von dem Einführelement abgelegt wird, sich zunehmend wieder dem Sollverlauf annähert. Da die Einhaltung der erforderlichen Erdüberdeckung, also die Einhaltung der Verlegetiefe, bzw. des erforderlichen Sohlgefälles jedoch die am meisten maßgeblichen Kriterien sind, damit auch Hochspannungsleitungen oder Gefälleleitungen im Pflügeverfahren verlegt werden können, sollte insbesondere die Pflügetiefe des Pflugschwerts unter Berücksichtigung der Höhenlage des Geländes und der Höhenlage der eingepflügten Leitung gesteuert werden. Solange nämlich die erforderliche Überdeckung bzw. das erforderliche Sohlgefälle eingehalten wird, können geringfügige Lageabweichungen der eingepflügten Trasse in der horizontalen Ebene in x- und y-Richtung vernachlässigt werden.

Zwar kann grundsätzlich jede Einrichtung zur Ermittlung der Leitungspositionsdaten einer eingepflügten Leitung verwendet werden, welche zur Vermessung des für die Verlegetiefe der Leitung repräsentativen mit dem Einführelement gekoppelten Punktes geeignet ist. Es kann sich jedoch als vorteilhaft erweisen, zur Ermittlung der Leitungspositionsdaten die Position des sich mit dem Einführelement mitbewegenden Punkts durch GPS-Vermessung unter Verwendung eines GPS-Verarbeitungsmoduls zu bestimmen, das mit einer GPS-Antenne gekoppelt ist, die an dem für die Verlegetiefe repräsentativen Punkt angeordnet wurde. Ebenfalls kann zur Ermittlung der Leitungspositionsdaten die Position des sich mit dem Einführelement mitbewegenden Punkts durch Tachymetrieren, beispielsweise mit Hilfe einer selbsttätigen Totalstation mit automatischer Zielverfolgung bestimmt werden. Die Positionsbestimmung mittels GPS-Vermessung oder Tachymetrieren durchzuführen, erweist sich dadurch als vorteilhaft, dass hierdurch das Verfahren weiter automatisiert und damit rationalisiert werden kann, da zur Bestimmung der Lage der Leitung in der Ebene keine aufwändigen Vermessungsarbeiten beispielsweise unter Verwendung von Maßbändern erforderlich werden. Insbesondere durch die Verwendung einer selbsttätigen Totalstation mit automatischer Zielverfolgung oder eines GPS-Vermessungsverfahrens kann somit ein kontinuierlicher Verlegefortschritt erzielt werden. Vor allem bietet jedoch die GPS-Vermessung den Vorteil, dass keinerlei Justierungs- und Kalibrierungsmaßnahmen durchgeführt werden müssen, da das GPS-Verarbeitungsmodul jederzeit und an jedem Ort die empfangenen GPS-Signale direkt verarbeiten kann, wodurch das Verfahren besonders effizient wird.

Da insbesondere bei der Verlegung von Hochspannungsleitungen aus Sicherheitsgründen vorgegebene zulässige Zugspannungen in den Leitungen nicht überschritten werden dürfen, können bei dem erfindungsgemäßen Verfahren fernerhin die in der einzupflügenden Leitung herrschenden Zugkräfte kontinuierlich ermittelt werden. Die Ermittlung der in der Leitung herrschenden Zugkräfte kann dabei dergestalt erfolgen, dass wiederholt eine von der einzupflügenden Leitung auf das Einführelement ausgeübte Kraft ermittelt und in eine Längszugkraft mit einem bestimmten Faktor umgerechnet wird.

So werden nämlich während des Einführens der Leitung durch das Einführelement in das Erdreich von der Leitung auf das Einführelement beispielsweise Reibungs- oder Umlenkkräfte ausgeübt, welche mit den in der Leitung herrschenden Zugkräften im Gleichgewicht stehen. Die Kräfte, welche während des Einführens der Leitung auf das Einführelement ausgeübt werden, sind daher für die in der Leitung herrschenden Zugkräfte repräsentativ, sodass mit Hilfe einer Kraftmesseinrichtung wie beispielsweise einer Kraftmessdose von der Leitung auf das Einführelement ausgeübten Kräfte mittels eines geeigneten Faktors in entsprechende Zugkräfte umgerechnet werden können, welche unter Umständen nach dem Ablegen der Leitung auf der Sohle des Verlegeschlitzes in der Leitung noch vorhanden sind.

Empirische Versuche haben dabei ergeben, dass dieser Faktor bei einer Konstellation einen Betrag von eins aufweist, sodass die an dem Einführelement gemessenen Kräfte direkt die nach dem Ablegen der Leitung auf der Sohle des Verlegeschlitzes noch vorhandenen Zugkräfte wiedergeben. Der Vollständigkeit halber sei an dieser Stelle jedoch erwähnt, dass der Umrechungsfaktor je nach Form des Einführelements sowie nach Art der Anbringung der Kraftmesseinrichtung am Einführelement und/oder auch in Abhängigkeit von den vorhandenen Bodenparametern abweichen kann.

In einem weiteren Verfahrensschritt können dann die ermittelten Zugkräfte und/oder die ermittelten Gelände- und Leitungskoordinaten, insbesondere deren jeweilige Höhenlage, in Abhängigkeit von den Lagekoordinaten der Leitungssolltrasse beispielsweise auf einem Anzeigebildschirm visualisiert werden, welcher sich im Führerstand des Verlegepflugs befindet. Durch eine derartige Visualisierung kann die den Verlegepflug bedienende Person manuell auf das Verfahren Einfluss nehmen, um beispielsweise die Verlegerichtung durch Veränderung des Seiteneinschlags oder der Neigung des Pflugschwerts oder dessen Höhenlage zu variieren.

Zwar lässt sich das Verfahren, nachdem eine etwaige Abweichung der eingepflügten Leitung von der Solltrasse festgestellt wurde, in der voran beschriebenen Art und Weise beeinflussen. Zu Zwecken der Qualitätssicherung und -überwachung kann es jedoch auch wünschenswert sein, eine Dokumentation des Verfahrens vorzusehen. Hierzu können die ermittelten Leitungskoordinaten einschließlich der Verlegetiefe sowie die ermittelten Zugkräfte in einer Protokolldatei abgespeichert werden, in der zusätzlich auch beispielsweise die Verlegezeit und/oder -temperatur abgespeichert werden kann. Auch können bei Bedarf weitere Sachinformationen mit automatischen Lagebezug manuell in die Protokolldatei abgespeichert werden. Die in der Protokolldatei abgespeicherten Informationen können dann zu einem späteren Zeitpunkt wieder abgerufen werden können, um tabellarisch und/oder graphisch visualisiert zu werden. Hierdurch kann eine Dokumentation über den tatsächlichen Verlauf der verlegten Leitung sowie die in der Leitung herrschenden Zugkräfte zur Verfügung gestellt werden, mit Hilfe derer sich die Einhaltung der erforderlichen Verlegetiefe sowie der zulässigen Zugkräfte zu Zwecken der Qualitätssicherung nachweisen lässt.

Im Folgenden wird nun auf bevorzugte Ausführungsformen des erfindungsgemäßen Systems zum überwachten Verlegen von Leitungen im Erdreich eingegangen, wobei sich die unter Bezugnahme auf das System beschriebenen Aspekte in entsprechender Weise auch auf das erfindungsgemäße Verfahren übertragen lassen.

So weist der für die Verlegetiefe repräsentative Punkt, an welchem sich die Empfangseinheit befindet, in horizontaler Richtung einen definierten Abstand zu der Stelle an der Unterseite des Einführelements auf, welche auf der Sohle des Verlegeschlitzes aufsteht. Hierdurch kann gewährleistet werden, dass die aktuell erfasste Höhenlage der in den Verlegeschlitz eingebrachten Leitung den jeweils zugehörigen Leitungskoordinaten in der Ebene zugeordnet werden kann. Ähnlich wie der Sollabstand ist dabei der in horizontaler Richtung definierte Abstand eine Größe, die der in horizontaler Richtung gemessenen Entfernung des für die Verlegetiefe repräsentative Punktes von der Stelle entspricht, an der das Einführelement auf der Sohle des Verlegeschlitzes aufsteht, und zwar bei nicht in Längsrichtung geneigtem Pflugschwert bzw. bei nicht in Längsrichtung geneigtem Einführelement.

Da in den zu Zwecken der Leitungstrassierung verwendeten Höhenplänen in aller Regel kleinere örtliche Gegebenheiten wie beispielsweise lokale Geländeerhebungen oder -senken nicht kartiert sind, welche jedoch bei der Trassenplanung berücksichtigt werden müssen, besteht die Gefahr, dass beispielsweise an kleineren Geländesenken die erforderliche Verlegetiefe nicht eingehalten wird.

Um diesem Problem zu begegnen, kann das erfindungsgemäße System gemäß einer weiteren Ausführungsform eine mit dem Verlegepflug gekoppelte, vorzugsweise mechanisch arbeitende Abtasteinrichtung aufweisen, die dem Pflugschwert vorauseilt und die kontinuierlich eine für den Abstand zwischen einem Festpunkt des Pflugschwerts und der Geländeoberfläche repräsentative Distanzgröße unmittelbar vor dem Pflugschwert erfasst. Diese Distanzgröße kann dann dazu verwendet werden, um in Kenntnis der geometrischen Eigenschaften des Pflugschwerts direkt die tatsächliche Verlegetiefe zu bestimmen.

Wenn beispielsweise das Pflugschwert bis zur Unterkante seines Pflugschuhs eine Höhe *(S + dS)* aufweist, wobei S die feste Höhe des Pflugschwerts und *dS* die einstellbare Schuhhöhe ist, so kann die tatsächliche Verlegetiefe *T* in Kenntnis der Distanzgröße *HG* in Form des Abstands zwischen einem Festpunkt des Pflugschwerts und der Geländeoberfläche berechnet werden. Die tatsächliche Verlegetiefe *T* lässt sich dabei als die Differenz aus der Höhe *(S + dS)* und der Summe aus der Höhe des Pflugschwerts über dem genannten Festpunkt desselben und der Distanzgröße *HG* bestimmen.

Gemäß einer Ausführungsform ist die Auswerteeinheit ferner speziell eingerichtet, um auf Grundlage der von der Erfassungseinrichtung erfassten Positionsdaten die Höhenlage der eingepflügten Leitung in Abhängigkeit von deren um den ermittelten Versatz korrigierten Lagekoordinaten zu bestimmen. Da es sich bei der Erfassungseinrichtung gemäß bevorzugten Ausführungsformen um einen Tachymeter, insbesondere um eine selbsttätige Totalstation mit automatischer Zielverfolgung, oder um ein GPS-Verarbeitungsmodul handeln kann, kann es sich bei der Auswerteeinheit beispielsweise um einen Mikrocomputer handeln, welcher programmtechnisch derart eingerichtet ist, dass er die von dem Tachymeter zur Verfügung gestellten Winkel- und Entfernungsangaben bzw. die von der GPS-Antenne empfangenen GPS-Signale in Koordinatentripel umrechnen kann. Im Falle, dass es sich bei der Erfassungseinrichtung um ein GPS-Verarbeitungsmodul handelt, kann dessen Funktionalität in der Auswerteeinheit implementiert sein.

Da es zu Steuerungszwecken beispielsweise wünschenswert sein kann, ein die Lageabweichung repräsentierendes Signal zur Verfügung stellen zu können, wie dies bereits zuvor unter Bezugnahme auf das erfindungsgemäße Verfahren beschrieben wurde, kann das erfindungsgemäße System ferner eine Vergleichseinheit umfassen, welche eingerichtet ist, um eine Lage- und/oder Höhenabweichung der eingepflügten Leitung gegenüber einer Leitungssolltrasse zu ermitteln. Die Vergleichseinheit erzeugt aus der so ermittelten Lageabweichung ein entsprechendes Signal, welches für die Lageabweichung repräsentativ ist und stellt dieses an einer Schnittstelle zur weiteren Verwendung beispielsweise zu Steuerungszwecken zur Verfügung.

Gemäß einer weiteren Ausführungsform kann das System ferner eine Steuereinrichtung umfassen, welche eingerichtet ist, um in Abhängigkeit von einer etwaigen Abweichung der Istkoordinaten der Leitung gegenüber der Leitungssolltrasse die Bewegungsrichtung des Pflugschwerts und/oder des die Pflügetiefe bestimmenden Pflugschuhs einzustellen. Im Falle, dass das System in der voran beschriebenen Art und Weise eine Vergleichseinheit aufweist, welche ein eine etwaige Lageabweichung repräsentierendes Signal zur Verfügung stellt, kann die Steuereinheit insbesondere unter Verwendung des die Lageabweichung repräsentierenden Signals die Bewegungsrichtung des Pflugschwerts einstellen. Es wird somit ein geschlossener Regelkreis zur Verfügung gestellt, mit welchem sich etwaige Lage- und Höhenabweichungen automatisch korrigieren lassen. Da die Steuereinrichtung direkt auf die Bewegungsrichtung des Pflugschwerts Einfluss nehmen kann, befindet sich diese üblicherweise direkt am Verlegepflug. Die Vergleichseinheit und/oder die Auswerteeinheit können sich jedoch entweder am Verlegepflug oder auch am oder in der Nähe des Tachymeters befinden. Die Steuereinheit und die Vergleichseinheit und/oder die Auswerteeinheit und die Vergleichseinheit können daher drahtlos miteinander kommunizieren, was sich insbesondere dann als vorteilhaft erweist, wenn als Erfassungseinrichtung ein Tachymeter oder eine Totalstation mit automatischer Zielverfolgung zum Einsatz kommt, welche sich in großer Entfernung von dem Verlegepflug befindet.

Zur Erfassung der in der eingepflügten Leitung herrschenden Zugkräfte kann das System ferner eine Kraftmesseinrichtung umfassen, welche eingerichtet ist, um wiederholt eine von der einzupflügenden Leitung auf das Einführelement ausgeübte Kraft zu ermitteln und in eine Längskraft umzurechnen. Die Kraftmesseinrichtung kann beispielsweise eine Kraftmessdose oder einen Dehnmessstreifen umfassen, welcher Verformungen des Einführelements erfasst, welche während des Einführens der Leitung auf das Einführelement beispielsweise durch Reibungs- oder Umlenkkräfte ausgeübt werden.

Gemäß einer Ausführungsform ist ferner eine Ausgabeeinrichtung vorgesehen, welche eingerichtet ist, um die ermittelten Zugkräfte und/oder die ermittelten Gelände- und Leitungskoordinaten, insbesondere deren jeweilige Höhenlage, sowie bei Bedarf weitere Sachinformationen in Abhängigkeit von den Lagekoordinaten der Leitungssolltrasse visuell, insbesondere tabellarisch und/oder graphisch, darzustellen. Bei der Ausgabeeinrichtung kann es sich beispielsweise um einen Anzeigebildschirm handeln, welcher sich im Führerstand des Verlegepflugs befindet. Der Bedienperson, die den Verlegepflug steuert, werden somit kontinuierlich Informationen über die aktuelle Lage der gerade verlegten Leitung sowie über die darin herrschenden Zugkräfte zur Verfügung gestellt, sodass die Bedienperson bei Bedarf regelnd auf den weiteren Verlegevorgang Einfluss nehmen kann.

Bei der Ausgabeeinrichtung kann es sich auch beispielsweise um einen Drucker handeln, sodass durch Auswertung dessen Ausdrucks gegebenenfalls Stellen identifiziert werden können, an denen die Position der verlegten Leitung in einem nachgelagerten Bearbeitungsschritt händisch korrigiert werden muss. Gleichermaßen kann ein derartiger Ausdruck jedoch auch zu Zwecken der Qualitätssicherung zum Nachweis dienen, dass die vorgegebenen Verlegeparameter wie beispielsweise die geforderte Verlegetiefe entlang der gesamten Leitungstrasse eingehalten wurden.

Im Folgenden wird nun die Erfindung rein exemplarisch anhand einer beispielhaften Ausführungsform unter Bezugnahme auf die beigefügten Zeichnungen beschrieben, wobei:

Fig. 1 eine schematische Darstellung des erfindungsgemäßen Sys- tems zum überwachten Verlegen von Leitungen im Erdreich zeigt;

Fig. 2 eine schematische Darstellung zur Veranschaulichung des seitlichen Versatzes der Empfangseinheit ist; und

Fig. 3 eine Detaildarstellung im Bereich um das Pflugschwert zeigt.

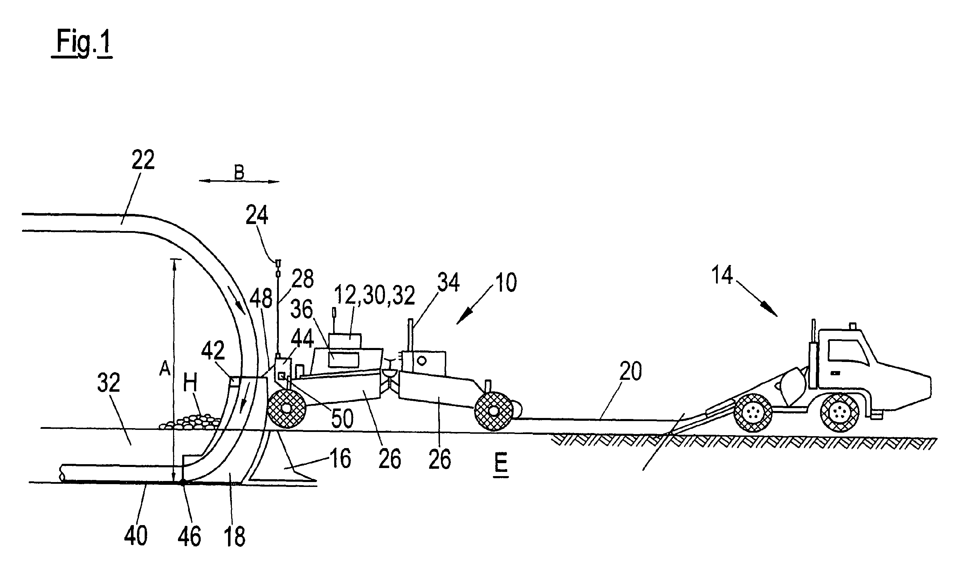

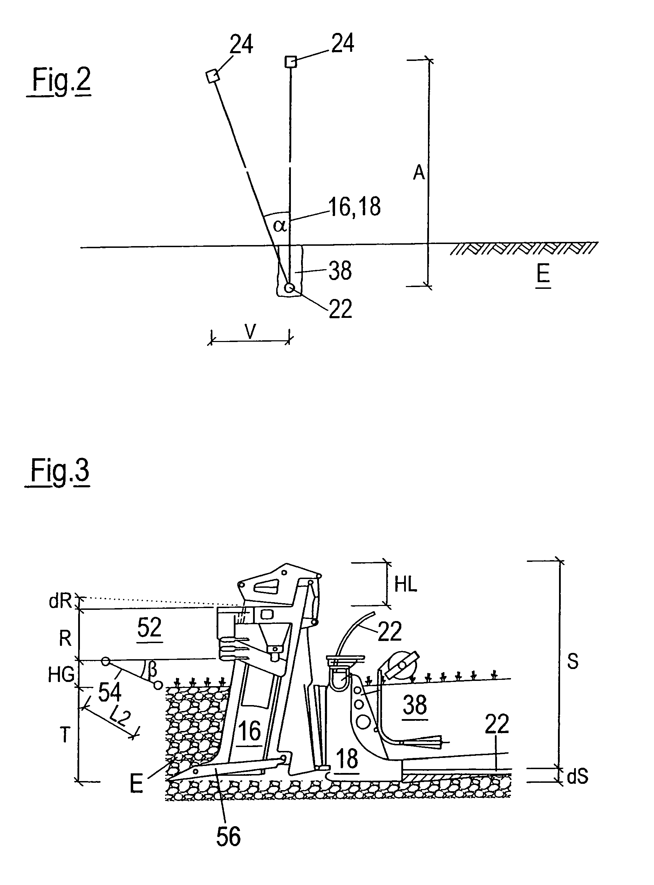

Zunächst wird im Folgenden unter Bezugnahme auf die Fig. 1 das Pflügeverfahren an sich zur Verlegung von Leitungen beschrieben. Bei dem Verfahren wird mit Hilfe eines Verlegepflugfahrzeugs 10 bzw. mit einem an dem Verlegepflugfahrzeug 10 gekoppelten Arbeitsorgan 16, 18 ein Verlegeschlitz 38 erzeugt, wobei während der Herstellung des Verlegeschlitzes gleichzeitig eine oder mehrere Leitungen 22 auf der Sohle 40 des Verlegeschlitzes 38 abgelegt werden. Das Verlegepflugfahrzeug 10 ist dabei über ein Seil 20 mit einem Zugfahrzeug 14 verbunden, welches das Verlegepflugfahrzeug 10 entlang der geplanten Leitungstrasse zieht. Das Verlegepflugfahrzeug 10 besteht im Wesentlichen aus einem einen Rahmen 52 (siehe Fig. 3) umfassenden Fahrgestell, an dem vier Auslegerarme 26 auskragend angebracht sind, an deren freien Enden sich jeweils ein Rad befindet. Die Auslegerarme 26 sind allseits bewegbar am Rahmen 52 des Fahrgestells angelenkt, um im Falle des Vorhandenseins von Hindernissen verschwenkt werden zu können.

Zur Herstellung des Verlegeschlitzes 38 umfasst das Arbeitsorgan 16, 18 des Verlegepflugfahrzeugs 10 ein vorauseilendes Pflugschwert 16, welches mit hohen Kräften das Erdreich E auseinanderpresst, wenn das Verlegepflugfahrzeug 10 von dem Zugfahrzeug 14 entlang der geplanten Leitungstrasse gezogen wird. Dem Pflugschwert 16 ist ein mit dem Pflugschwert 16 gekoppeltes Einführungselement 18 nachgeordnet, welches mit dem Pflugschwert 16 durch den erzeugten Schlitz 38 gezogen wird. Das Einführelement 18 fungiert dabei gewissermaßen als Einführtrichter, um die Leitung 22 in den kurz zuvor von dem Pflugschwert 16 erzeugten Verlegeschlitz 38 einführen und auf dessen Sohle 40 ablegen zu können.

Wie der Darstellung der Fig. 1 entnommen werden kann, entsteht direkt im Bereich des Arbeitsorgans 16, 18 bedingt durch den Pflügevorgang eine Erdanhäufung H, weshalb anhand des reinen Überstands des Einführelements 18 über das Erdreich nicht zuverlässig auf die Verlegetiefe in Bezug auf die ursprüngliche Geländeoberfläche geschlossen werden kann. Um diesem Problem zu begegnen wird während des Einführens der Leitung 22 in den Verlegeschlitz 38 wiederholt ein sich mit dem Einführelement 18 mitbewegender, für die Verlegetiefe der Leitung 22 repräsentativer Punkt vermessen, welcher in vertikaler Richtung einen definierten, konstanten Abstand A zu einer auf der Sohle 40 des Verlegeschlitzes 38 aufstehenden Unterseite des Einführelements 18 aufweist. Unter Verwendung der auf diese Weise entlang der eingefügten Leitung 22 erhaltenen Leitungspositionsdaten kann dann grundsätzlich auf die vorhandene Verlegetiefe und/oder die Lage der Leitung 22 in der x-y-Ebene geschlossen werden.

In der dargestellten Ausführungsform ist zur Bestimmung der Leitungspositionsdaten mit dem Einführelement 18 eine Empfangseinheit 24 in Form einer GPS-Antenne gekoppelt, welche sich an dem für die Verlegetiefe der Leitung 22 repräsentativen Punkt befindet, der in vertikaler Richtung einen definierten, konstanten Abstand A zu der auf der Sohle 40 des Verlegeschlitzes 38 aufstehenden Unterseite des Einführelements 18 aufweist. Wie der Fig. 1 entnommen werden kann, ist die GPS-Antenne 24 dabei über einen Stab 28 an einem Tragkörper 44 befestigt, welcher mit dem Einführelement 18 derart gekoppelt ist, dass der für die Verlegetiefe repräsentative Punkt, an welchem sich die GPS-Antenne 24 befindet, in sowohl vertikaler als auch in horizontaler Richtung jeweils einen konstanten und vorbestimmten Abstand A, B zu der Stelle 46 an der Unterseite des Einführelements 18 aufweist, welche auf der Sohle 40 des Verlegeschlitzes 38 aufsteht. Diese Kopplung ist in der Fig. 1 schematisch durch eine gestrichelte Linie 48 zwischen dem Tragkörper 44 und dem Einführelement 18 angedeutet. Anstelle die GPS-Antenne 24 über den Stab 28 an dem Tragkörper 44 zu befestigen, wäre es jedoch ebenfalls möglich, die GPS-Antenne 24 über den Stab 28 direkt an dem Einführelement 18 oder an dem Pflugschwert 16 anzubringen, solange gewährleistet ist, dass die GPS-Antenne 24 zum Empfang von GPS-Signalen durch keine störenden Hindernisse verdeckt wird.

Zur Erfassung der Leitungspositionsdaten weist das erfindungsgemäße System zum überwachten Verlegen von Leitungen 22 im Erdreich E ferner eine Einrichtung 12 auf, mit der sich während des Einführens der Leitung 22 in den Verlegeschlitz 38 kontinuierlich Positionsänderungen der GPS-Antenne 24 erfassen lassen. Bei dieser Erfassungseinrichtung 12 handelt es sich in der dargestellten Ausführungform um ein GPS-Verarbeitungsmodul 12, das kontinuierlich die Position der GPS-Antenne 24 vermisst, indem es die von der GPS-Antenne 24 empfangenen GPS-Signale in entsprechende Koordinaten umrechnet. Die Funktionalität des GPS-Verarbeitungsmoduls 12 wird in der dargestellten Ausführungsform von einer Auswerteeinheit in Form eines Mikroprozessors wahrgenommen, welcher programmtechnisch derart eingerichtet ist, dass er auf Grundlage der von der GPS-Antenne 24 erfassten GPS-Signale die Höhenlage der eingepflügten Leitungen 22 in Abhängigkeit von deren Lagekoordinaten in der Ebene bestimmen kann. Alternativ können die Leitungspositionsdaten auch von einem Tachymeter empfangen werden.

Die auf diese Weise erhaltenen Koordinaten der verlegten Leitung 22 könnten nun beispielsweise über einen im Führerstand des Verlegepflugfahrzeugs 10 befindlichen Anzeigebildschirm 34 angezeigt werden. Auf diese Weise könnte die Bedienperson des Verlegepflugfahrzeugs 10 durch kontinuierliches Vergleichen der Koordinaten der Leitungssolltrasse mit den Istkoordinaten der verlegten Leitung 22 auf eine etwaige Fehllage schließen, um anschließend bei Bedarf auf den Verlegevorgang Einfluss zu nehmen, indem sie beispielsweise eine etwaige zu geringe Verlegetiefe korrigiert.

Um eine weitere Automatisierung des Verfahrens zu erreichen, kann das System ferner eine Vergleichseinheit 32 umfassen, welche Bestandteil der Auswerteeinheit 30 in Form eines Mikrocomputers an dem Verlegepflugfahrzeug 10 sein kann. Diese Vergleichseinheit 32 ist eingerichtet, um eine etwaige Lageabweichung der eingefügten Leitung 22 gegenüber der Leitungssolltrasse zu ermitteln. Auf diese Weise lässt sich von der Vergleichseinheit 32 ein eine etwaige Lageabweichung repräsentierendes Signal regenerieren, welches dann beispielsweise an einem Anzeigebildschirm 34 visualisiert werden kann.

Da sich die Empfangseinheit in Form der GPS-Antenne 24 jedoch aus Empfangsgründen am Ende eines verhältnismäßig langen Stabes 28 befindet, der mit dem Pflugschwert gekoppelt ist, stimmt die Lage der Empfangseinheit in der horizontalen x-y-Ebene unter Umständen nicht immer genau mit der Lage des zuletzt verlegten Leitungsabschnitts überein, wie dies beispielsweise dann der Fall ist, wenn das Pflugschwert aufgrund topografischer Gegebenheiten während des Verlegevorgangs eine seitliche Schrägstellung erfährt, wie dies in der Fig. 2 schematisch dargestellt ist. Wie aus dieser Darstellung entnommen werden kann, weist die GPS-Antenne 24 gegenüber der eigentlich korrekt verlegten Leitung 22 einen seitlichen Versatz $v$ auf, was dazu führen kann, dass die Bedienperson oder die später noch beschrieben Steuereinrichtung 36 fälschlicherweise eine Richtungsänderung des Pflugschwerts 16 veranlasst.

Um diesen Messfehler zu eliminieren ist an dem Tragkörper 44 ein Querneigungsmesser 50 angeordnet, der kontinuierlich einen für eine Schrägstellung des Pflugschwertes 16 gegenüber der Vertikalen repräsentativen Winkel $\alpha$ misst. Da sich die GPS-Antenne 24 aufgrund der Kopplung zwischen Pflugschwert 16 und Einführelement 18 sowie zwischen Tragkörper 44 und Einführelement 18 mit dem Pflugschwert 16 mitbewegt, entspricht der von dem Querneigungsmesser 50 erfasste Winkel $\alpha$, dem Winkel um den der Stab 28 ausgelenkt wurde, so dass in Kenntnis des Abstands A zwischen der Sohle 40 des Verlegeschlitzes 38 und dem für die Verlegetiefe repräsentativen Punkt und der Winkelstellung $\alpha$ des Pflugschwerts 16 der Versatz $v$ zu

$$v = (sin\ \alpha)\ ^{*}\ A$$

von der Auswerteeinheit 30 bestimmt werden kann, womit dann anschließend eine Fehlerkorrektur der ermittelten Leitungspositionsdaten bzw. -koordinaten vorgenommen werden kann.

Anstelle manuell auf den Verlegevorgang in der voran beschriebenen Weise Einfluss zu nehmen, kann das Verlegeverfahren auch weiter automatisiert werden, indem eine entsprechend eingerichtete Steuereinrichtung 36 vorgesehen wird, welche eingerichtet ist, um in Abhängigkeit von einer etwaigen Abweichung der Istkoordinaten der Leitung 22 gegenüber der Leitungssolltrasse die Bewegungsrichtung des Pflugschwerts 16 einzustellen. In diesem Falle würde die Steuereinrichtung 36 die von der Vergleichseinheit 32 zur Verfügung gestellten, eine etwaige Lageabweichung repräsentierenden Signale zur Ansteuerung von Betätigungsaktoren verwenden, mit denen sich beispielsweise der Seiteneinschlag des Pflugschwerts 16 oder die Neigung des Pflugschuhs 56 einstellen lässt, um somit den Leitungsverlauf der Leitungssolltrasse wieder anzunähern.

Unter Bezugnahme auf die Fig. 3 wird nun die erfindungsgemäße Geländeerfassung sowie die darauf basierende Überprüfung der tatsächlichen Verlegetiefe der Leitung genauer erläutert. Die Fig. 3 zeigt das am Rahmen 52 des Verlegepflugfahrzeugs 10 angelenkte Pflugschwert 16, welches ihrerseits in dem von ihm erzeugten Verlegeschlitz 38 das Einführelement 18 hinter sich herzieht. Zur Ermittlung der tatsächlichen Höhenlage des Geländes, ist an der Unterseite des Rahmens 52 ein Abtastpendel 54 angelenkt, welches während der Erzeugung des Verlegeschlitzes 38 mit Hilfe des Pflugschwerts 16 demselben vorauseilt. Das Abtastpendel 54 ist dabei an der Unterseite des Rahmens 52 gelenkig angelenkt und schleift mit seinem freien Ende auf dem Erdreich E entlang, so dass der Auslenkungswinkel $\beta$ des Abtastpendels 54 eine Distanzgröße darstellt, die für den Abstand zwischen Rahmenunterkante und Geländeoberfläche repräsentativ ist. In Kenntnis der Länge *L2* des Pendels 54 kann dann der Abstand *HG* zwischen Rahmenunterkante und Geländeoberfläche berechnet werden zu

$$HG = (\sin \beta) * L2 \, .$$

Da sowohl die Rahmenhöhe $R$, über welche hinweg das Pflugschwert am Rahmen 52 angelenkt ist, als auch die Höhe $HL$ des Pflugschwerts 16 über dem Rahmen bekannte geometrische Größen sind, kann dann die tatsächliche Verlegetiefe $T$ berechnet werden zu

$$T = S + dS - (HL + R + HG + dR) \, ,$$

wobei S die Pflugschwerthöhe, dS die einstellbare Höhe des Pflugschuhs 56 und $dR$ eine Höhendifferenz ist, welche sich durch eine mit Hilfe eines Längsneigungsmessers erfassbare Längsneigung des Rahmens 52 ergeben kann. Da sich die Größe $HG$ aus dem Auslenkungswinkel $\beta$ und die Höhendifferenz $dR$ aus der Längsneigung bestimmen lässt, kann somit unter Verwendung des Abtastpendels 54 auf sehr einfache Art und Weise die tatsächliche Verlegetiefe $T$ der Leitung 22 anhand der voranstehenden Gleichung bestimmt werden. Durch die Tatsache, dass das Abtastpendel 54 dem Pflugschwert 16 vorauseilt, wird die durch das Abtastpendel 54 erfasste Abstandsgröße $HG$ nicht durch etwaige Erdanhäufungen verfälscht, die durch das Pflugschwert 16 erzeugt werden, so dass die Verlegetiefe $T$ verhältnismäßig genau berechnet werden kann.

Obwohl die anhand der voranstehenden Gleichung bestimmte Verlegetiefe $T$ schon verhältnismäßig genau die tatsächliche Verlegetiefe wiedergibt, kann eine weiter Verbesserung bei der Bestimmung der Verlegetiefe dadurch erreicht werden, dass zusätzlich auch noch der Einfluss einer etwaigen Schrägstellung $\alpha$ des Pflugschwerts bei der Bestimmung der Verlegetiefe berücksichtigt wird. Dies kann dadurch erfolgen, dass das Ergebnis $T$ der voranstehenden Gleichung noch mit ($\cos \alpha$) multipliziert wird.

Wie der Darstellung der Fig. 1 entnommen werden kann, ist im Bereich des Einführtrichters des Einführelements 18 eine hier nur schematisch dargestellte Kraftmesseinrichtung 42 vorgesehen, welche kontinuierlich die Kräfte misst, welche von der Leitung 22 während des Einpflügevorgangs auf sie ausgeübt werden. Zwar stellen diese Kräfte nicht zwangsweise schon die Längszugkräfte dar, welche während des Einpflügevorgangs auf die Leitung 22 beispielsweise in Folge der Umlenkung im Einführelement 18 oder infolge Reibung ausgeübt werden, jedoch lassen sich die von der Kraftmesseinrichtung 42 erfassten Kräfte durch einfache Multiplikation mit einem Faktor in entsprechende Längszugkräfte in der Leitung 22 umrechnen. Auf diese Weise lassen sich kontinuierlich die während des Einpflügevorgangs in der Leitung 22 herrschenden Längszugkräfte erfassen und zusammen mit etwaigen Lageabweichungen der Leitung 22 visualisieren.

Zu Zwecken der Qualitätssicherung und Dokumentation können die von der Auswerteeinheit 30 ermittelten Leitungskoordinaten einschließlich der von der Kraftmesseinrichtung 42 ermittelten Längszugkräfte sowie gegebenenfalls weiterer Sachinformationen, die mit dem Verlegevorgang in Beziehung stehen, in einer Protokolldatei abgespeichert werden, deren Inhalte zu einem späteren Zeitpunkt ausgelesen und tabellarisch und/oder graphisch dargestellt werden können.

Die auf diese Weise visualisierten Protokolldateien können somit im Nachhinein als Beleg dafür verwendet werden, dass zum einen die erforderliche Verlegetiefe und zum anderen die zulässigen Zugkräfte bei der Leitungsverlegung eingehalten wurden, was gerade bei der Verlegung von Hochspannungsleitungen aus Sicherheitsgründen zwingend erforderlich ist.

Obwohl die Erfindung in der Figuren anhand eines Pflügeverfahrens erläutert wurde, bei dem die Leitung von oben durch das Einführelement hindurch in den Verlegeschlitz eingeführt wird, sei der Vollständigkeit halber noch erwähnt, dass die Erfindung hierauf nicht beschränkt ist. Vielmehr ist es ebenso möglich, eine Leitung unter Verwendung des Torpedo- oder Raketenpflugverfahren überwacht im Erdreich zu verlegen, indem während des Einbringens der Leitung in den Verlegeschlitz wiederholt Leitungspositionsdaten entlang der in den Schlitz eingebrachten Leitung durch Vermessen eines sich mit dem Einführelement mitbewegenden, für die Verlegetiefe der Leitung repräsentativen Punktes ermittelt werden, welcher in vertikaler Richtung einen definierten, konstanten Abstand zu einer auf der Sohle des Verlegeschlitzes aufstehenden Unterseite des Einführelements in Form des bei dem Torpedo- oder Raketenpflugverfahren verwendeten Aufweitkörpers aufweist.

<u>Bezugszeichenliste</u>

10 Verlegepflugfahrzeug
12 Erfassungseinrichtung bzw. GPS-Verarbeitungsmodul
14 Pflugfahrzeug
16 Pflugschwert
18 Einführelement
20 Zugseil
22 Leitung
24 Empfangseinheit bzw. GPS-Antenne
26 Auslegerarme
28 Stab
30 Auswerteeinheit
32 Vergleichseinheit
34 Ausgabeeinrichtung
36 Steuereinrichtung
38 Verlegeschlitz
40 Sohle
42 Kraftmesseinrichtung
44 Tragkörper
46 Aufstandpunkt von 18 auf 40
48 starre Kopplung von 18 und 44
50 Querneigungsmesser
52 Rahmen
54 Abtastpendel
56 Pflugschuh

A    Distanz Unterseite von 18-24

B    Distanz 46-24

E    Erdreich

H    Erdanhäufung

**Patentansprüche**

1.  Verfahren zum überwachten Verlegen von Leitungen (22) im Erdreich (E), mit den Schritten:

    - Erzeugen eines Verlegeschlitzes (38) im Erdreich (E) zur Aufnahme der zu verlegenden Leitung (22) mit einem Pflugschwert (16);
    - Einbringen der Leitung (22) in den Verlegeschlitz (38) mittels eines in den Verlegeschlitz (38) hineinragenden Einführelements (18), welches auf der Sohle (40) des Verlegeschlitzes (38) in Längsrichtung des Verlegeschlitzes (38) bewegt wird; und
    - Ermitteln von Leitungspositionsdaten entlang der eingebrachten Leitung (22) während des Einbringens der Leitung (22) in den Verlegeschlitz (38) durch wiederholtes Vermessen eines sich mit dem Einführelement (18) mitbewegenden, für die Verlegetiefe der Leitung (22) repräsentativen Punktes (24), welcher in vertikaler Richtung einen definierbaren, konstanten Sollabstand (A) zu einer auf der Sohle (40) des Verlegeschlitzes (38) aufstehenden Unterseite des Einführelements (18) aufweist;

    **dadurch gekennzeichnet, dass**
    bei der Ermittlung der Leitungspositionsdaten ein seitlicher Versatz des für die Verlegetiefe der Leitung (22) repräsentativen Punktes (24) bezüglich der auf der Sohle (40) des Verlegeschlitzes (38) aufstehenden Unterseite des Einführelements (18) berücksichtigt wird, indem ein für eine Schrägstellung des Pflugschwerts (16) gegenüber der Vertikalen repräsentativer Winkel bestimmt und daraus unter Verwendung des Sollabstands (A) der seitliche Versatz ermittelt wird.

2. Verfahren nach Anspruch 1,
**dadurch gekennzeichnet, dass** der für die Verlegetiefe der Leitung (22) repräsentative Punkt (24) in horizontaler Richtung einen definierten, festen Abstand (B) zu der Stelle (46) an der Unterseite des Einführelements (18) aufweist, welche auf der Sohle (40) des Verlegeschlitzes (38) aufsteht.

3. Verfahren nach Anspruch 1 oder 2,
**dadurch gekennzeichnet, dass**
auf Grundlage der Leitungspositionsdaten die Höhenlage der in den Verlegeschlitz (38) eingebrachten Leitung (22) in Abhängigkeit von ihren Lagekoordinaten bestimmt wird.

4. Verfahren nach zumindest einem der vorstehenden Ansprüche, **gekennzeichnet, durch** den weiteren Schritt:

   - Erfassen von Geländepositionsdaten entlang einer Leitungssolltrasse,

   wobei der Schritt des Erfassens von Geländepositionsdaten entlang einer Leitungssolltrasse vorzugsweise zeitlich während und örtlich vor dem Schritt des Erzeugens eines Verlegeschlitzes (38) im Erdreich (E) erfolgt, und/oder insbesondere
   wobei auf Grundlage der Geländepositionsdaten die Höhenlage des Geländes in Abhängigkeit von den Lagekoordinaten der Leitungssolltrasse erfasst wird.

5. Verfahren nach Anspruch 4,
**gekennzeichnet, durch** den weiteren Schritt:

   - Ermitteln etwaiger Lageabweichungen, insbesondere Abweichungen in Höhe und/oder Lage, der eingepflügten Leitung (22) gegenüber der Leitungssolltrasse, wobei vorzugsweise ein die ermittelte Lageabweichung repräsentierendes Signal erzeugt wird.

6. Verfahren nach Anspruch 5,
**dadurch gekennzeichnet, dass**
der Verlegeschlitz (38) mit einem Pflugschwert (16) erzeugt wird, dessen Bewegungsrichtung in Abhängigkeit von der ermittelten Lageabweichung, insbesondere unter Verwendung des die Lageabweichung repräsentierenden Signals, gesteuert wird, wobei vorzugsweise die Pflügetiefe des Pflugschwerts (16) unter Berücksichtigung der Höhenlage des Geländes und der Höhenlage der eingepflügten Leitung (22) gesteuert wird.

7. Verfahren nach zumindest einem der voranstehenden Ansprüche,
**dadurch gekennzeichnet,**
**dass** zur Ermittlung der Leitungspositionsdaten die Position des sich mit dem Einführelement (18) mitbewegenden, für die Verlegetiefe der Leitung (22) repräsentativen Punktes durch GPS-Vermessung, insbesondere unter Verwendung eines GPS-Verarbeitungsmoduls bestimmt wird, das mit einer GPS-Antenne (24) gekoppelt ist, die an dem für die Verlegetiefe der Leitung (22) repräsentativen Punkt (24) angeordnet wurde; oder
**dass** zur Ermittlung der Leitungspositionsdaten die Position des sich mit dem Einführelement (18) mitbewegenden Punktes durch Tachymetrieren, insbesondere mit Hilfe einer selbsttätigen Totalstation mit automatischer Zielverfolgung bestimmt wird.

8. Verfahren nach zumindest einem der voranstehenden Ansprüche,
**gekennzeichnet, durch** den Schritt:

   - Ermitteln der in der eingepflügten Leitung (22) herrschenden Zugkräfte, und zwar vorzugsweise indem die in der Leitung herrschenden Zugkräfte ermittelt werden, indem wiederholt eine von der einzupflügenden Leitung (22) auf das Einführelement (18) ausgeübte Kraft ermittelt und in eine Längszugkraft umgerechnet wird.

9. Verfahren nach Anspruch 8,
**gekennzeichnet, durch** zumindest einen der Schritte:

   - Abspeichern der ermittelten Zugkräfte und/oder der ermittelten Gelände- und Leitungskoordinaten, insbesondere deren jeweilige Höhenlage, in Abhängigkeit von den Lagekoordinaten der Leitungssolltrasse in einer Protokolldatei; und/oder
- Visualisieren, und zwar vorzugsweise in tabellarischer und/oder graphischer Form, der ermittelten Zugkräfte und/oder der ermittelten Gelände- und Leitungskoordinaten, insbesondere deren jeweilige Höhenlage, und gegebenenfalls weiteren mit dem Verlegevorgang in Beziehung stehenden Sachinformationen in Abhängigkeit von den Lagekoordinaten der Leitungssolltrasse.

10.  System zum überwachten Verlegen von Leitungen (22) im Erdreich (E), umfassend:

- einen Verlegepflug mit einem Pflugschwert (16) zum Erzeugen eines Verlegeschlitzes (38) im Erdreich (E) zur Aufnahme der zu verlegenden Leitung (22);
- ein mit dem Pflugschwert (16) gekoppeltes Einführelement (18), welches auf der Sohle (40) des Verlegeschlitzes (38) in Längsrichtung desselben bewegbar ist und welches eine auf der Sohle (40) aufstehende Unterseite umfasst, wobei das Einführelement (18) mit einer Empfangseinheit (24) gekoppelt ist, die sich an einem für die Verlegetiefe der Leitung repräsentativen Punkt befindet, welcher in vertikaler Richtung einen definierbaren, konstanten Sollabstand (A) zu der auf der Sohle (40) des Verlegeschlitzes (38) aufstehenden Unterseite des Einführelements (18) aufweist; und
- eine Einrichtung (12), welche eingerichtet ist, um während des Einführens der Leitung (22) wiederholt die Position der Empfangseinheit (24) zu erfassen;
**gekennzeichnet durch**
- einen Querneigungsmesser (50), der an dem Verlegepflug (10) derart angeordnet und eingerichtet ist, um einen für eine Schrägstellung des Pflugschwert (16) gegenüber der Vertikalen repräsentativen Winkel zu bestimmen; und
- eine Auswerteinheit (30), die zur Berücksichtigung eines seitlichen Versatzes zwischen dem für die Verlegetiefe (22) repräsentativen Punkt (24) und der auf der Sohle (40) des Verlegeschlitzes (38) aufstehenden Unterseite des Einführelements (18) eingerichtet ist, um auf Grundlage der von der Erfassungseinrichtung (12) erfassten Positionsdaten unter Verwendung des Sollabstands (A) sowie des von dem Querneigungsmesser (50) bestimmten Winkels die tatsächlichen Leitungspositionsdaten zu bestimmen.

11.  System nach Anspruch 10,
**dadurch gekennzeichnet, dass**
die Auswerteinheit (30) ferner eingerichtet ist, um auf Grundlage der von der Erfassungseinrichtung (12) erfassten Positionsdaten die Höhenlage der in den Verlegeschlitz (38) eingebrachten Leitung (22) in Abhängigkeit von ihren tatsächlichen Lagekoordinaten zu bestimmen.

12.  System nach Anspruch 10 oder 11,
**dadurch gekennzeichnet, dass**
der für die Verlegetiefe repräsentative Punkt, an welchem sich die Empfangseinheit (24) befindet, auch in horizontaler Richtung einen definierten festen Abstand (B) zu der Stelle (46) an der Unterseite des Einführelements (18) aufweist, welche auf der Sohle (40) des Verlegeschlitzes (38) aufsteht.

13.  System nach zumindest einem der Ansprüche 10 bis 12, ferner umfassend:

- eine mit dem Verlegepflug gekoppelte, vorzugsweise mechanisch arbeitende Abtasteinrichtung (54), die kontinuierlich eine für den Abstand zwischen einem Festpunkt des Pflugschwerts (16) und der Geländeoberfläche repräsentative Distanzgröße ($\beta$) unmittelbar vor dem Pflugschwert (16) erfasst, und/oder
- eine Vergleichseinheit (32), welche eingerichtet ist, um eine Lageabweichung der einpflügten Leitung (22) gegenüber einer Leitungssolltrasse zu ermitteln, wobei die Vergleicheinheit (32) vorzugsweise ferner zur Erzeugung und Ausgabe eines die ermittelte Lageabweichung repräsentierenden Signals eingerichtet ist.

14.  System nach Anspruch 13, ferner umfassend:

- eine Steuereinrichtung (36), welche eingerichtet ist, um in Abhängigkeit von einer etwaigen Abweichung der Leitungskoordinaten gegenüber der Leitungssolltrasse, insbesondere unter Verwendung des die Lageabweichung repräsentierenden Signals, die Bewegungsrichtung des Pflugschwerts (16) einzustellen, wobei die Steuereinrichtung (36) vorzugsweise ferner eingerichtet ist, um in Abhängigkeit von der ermittelten Höhenlage der eingepflügten Leitung (22) die Pflügetiefe des Pflugschwerts (16) einzustellen.

15.  System nach Anspruch 14,

**dadurch gekennzeichnet, dass**
die Steuereinrichtung (36) und die Vergleichseinheit (32) und/oder die Auswerteeinheit und die Vergleichseinheit drahtlos miteinander kommunizieren.

16. System nach zumindest einem der Ansprüche 10 bis 15,
**dadurch gekennzeichnet,**
**dass** die Empfangseinheit (24) ein Reflektor und die Erfassungseinrichtung (12) ein Tachymeter (12), insbesondere eine Totalstation mit automatischer Zielverfolgung ist; und/oder dass die Empfangseinheit (24) eine GPS-Antenne und die Erfassungseinrichtung (12) ein GPS-Verarbeitungsmodul (12) ist, dessen Funktionalität vorzugsweise in der Auswerteinheit (30) implementiert ist.

17. System nach zumindest einem der Ansprüche 10 bis 16, ferner umfassend:

- eine Kraftmesseinrichtung (42) zur Messung der in der eingepflügten Leitung (22) herrschenden Zugkräfte, wobei die Kraftmesseinrichtung (42) eingerichtet ist, um wiederholt eine von der einzupflügenden Leitung (22) auf das Einführelement (18) ausgeübte Kraft zu ermitteln und in eine Längszugkraft umzurechnen, und
- insbesondere eine Speichereinrichtung, von der die ermittelten Zugkräfte und/oder die ermittelten Gelände- und Leitungskoordinaten, insbesondere deren jeweilige Höhenlage, in Abhängigkeit von den Lagekoordinaten der Leitungssolltrasse abgespeichert werden, sowie
- ferner insbesondere eine Ausgabeeinrichtung (34), welche eingerichtet ist, um die ermittelten Zugkräfte und/ oder die ermittelten Gelände- und Leitungskoordinaten, insbesondere deren jeweilige Höhenlage, in Abhängigkeit der Lagekoordinaten der Leitungssolltrasse visuell, insbesondere tabellarisch und/oder graphisch, darzustellen.

18. System nach zumindest einem der Ansprüche 10 bis 16,
**dadurch gekennzeichnet, dass**
der Verlegepflug und/oder das Pflugschwert mit einer Messtechnik zur Erfassung deren Längs- und/oder Querneigung sowie mit einer Messtechnik zur Erfassung der Schuhneigungs- und/oder Pflugschwerteinstellung ausgestattet ist/ sind.

Fig.1

EP 2 270 374 A2

14

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007043647 A1